(19) Europäisches Patentamt
European Patent Office
Office européen des brevets

(11) EP 4 428 187 A1

(12) EUROPEAN PATENT APPLICATION
published in accordance with Art. 153(4) EPC

(43) Date of publication:
**11.09.2024 Bulletin 2024/37**

(21) Application number: **22889682.5**

(22) Date of filing: **22.09.2022**

(51) International Patent Classification (IPC):
***C08L 9/00*** *(2006.01)* ***B60C 1/00*** *(2006.01)*
***C08K 3/04*** *(2006.01)* ***C08K 5/18*** *(2006.01)*
***C08L 7/00*** *(2006.01)* ***G01B 7/16*** *(2006.01)*

(52) Cooperative Patent Classification (CPC):
**B60C 1/00; C08K 3/04; C08K 5/18; C08L 7/00; C08L 9/00; G01B 7/16**

(86) International application number:
**PCT/JP2022/035528**

(87) International publication number:
**WO 2023/079858 (11.05.2023 Gazette 2023/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.11.2021 JP 2021181514**

(71) Applicant: **BRIDGESTONE CORPORATION**
**Chuo-ku**
**Tokyo 104-8340 (JP)**

(72) Inventor: **URATA Tomohiro**
**Tokyo 104-8340 (JP)**

(74) Representative: **Marks & Clerk LLP**
**15 Fetter Lane**
**London EC4A 1BW (GB)**

# (54) CONDUCTIVE RUBBER COMPOSITION FOR SENSING

(57) To solve a problem of providing a conductive rubber composition for sensing that when adopted in a rubber product, enables high-accuracy detection of the magnitude of strain of the rubber product without the use of a sensor, a conductive rubber composition for sensing contains a diene rubber, carbon black, and an antioxidant, wherein the antioxidant satisfies a relationship in formula (i): HeavyAtomCount/MolWt $\leq$ 5.46 $\times$ MaxPartialCharge/MolWt + 0.071. In formula (i), HeavyAtomCount indicates a number of non-hydrogen atoms in the antioxidant, MolWt indicates molecular weight of the antioxidant, and MaxPartialCharge indicates partial charge (value of +$\delta$) of an atom that is most positively charged in the antioxidant.

*FIG. 5*

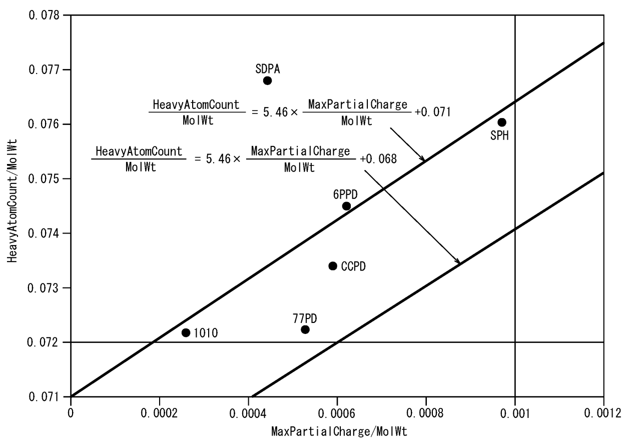


EP 4 428 187 A1

## Description

TECHNICAL FIELD

The present disclosure relates to a conductive rubber composition for sensing.

BACKGROUND

In rubber products such as rubber actuators and tires, there is demand for measuring the magnitude of strain of such rubber products. Detection of the magnitude of strain of typical rubber products requires the provision of a separate sensor (strain sensor, accelerometer, position detection sensor, angle sensor, etc.) externally to the rubber product.

On the other hand, a technique of inferring the magnitude of strain of a rubber product through measurement of an electrical resistance value of the rubber product without the use of a sensor is a known technique. For example, Patent Literature (PTL) 1, indicated below, discloses a technique of compounding carbon black and/or carbon nanotubes having high electrical conductivity with a rubber ingredient in production of a rubber material so as to impart electrical conductivity to the rubber material and determining correlation between electrical resistance value change due to strain and strain so as to infer the magnitude of strain of the rubber material.

CITATION LIST

Patent Literature

PTL 1: JP 2008-037906 A

SUMMARY

(Technical Problem)

However, although the technique described in PTL 1 makes it possible to roughly infer the magnitude of strain, the accuracy of this inference is inadequate, and there is room for further improvement of the accuracy of inference.

Accordingly, the present disclosure is directed at solving the problem in the conventional technique described above and providing a conductive rubber composition for sensing that when adopted in a rubber product, enables high-accuracy detection of the magnitude of strain of the rubber product without the use of a sensor.

(Solution to Problem)

Primary features of a conductive rubber composition for sensing according to the present disclosure that solves the problem set forth above are as follows.

[1] A conductive rubber composition for sensing comprising a diene rubber, carbon black, and an antioxidant, wherein the antioxidant satisfies a relationship in formula (i), shown below,

$$\mathrm{HeavyAtomCount/MolWt} \leq 5.46 \times \mathrm{MaxPartialCharge/MolWt} + 0.071 \quad \cdots \text{(i)}$$

where, in formula (i), HeavyAtomCount indicates a number of non-hydrogen atoms in the antioxidant, MolWt indicates molecular weight of the antioxidant, and MaxPartialCharge indicates partial charge, as a value of $+\delta$, of an atom that is most positively charged in the antioxidant.

[2] The conductive rubber composition for sensing according to the foregoing [1], wherein content of the carbon black is 45 parts by mass or more relative to 100 parts by mass of the diene rubber.

[3] The conductive rubber composition for sensing according to the foregoing [1] or [2], wherein the carbon black has a cetyltrimethylammonium bromide (CTAB) adsorption specific surface area of 110 $m^2/g$ or more.

[4] The conductive rubber composition for sensing according to any one of the foregoing [1] to [3], having reduced permittivity during extension compared to a rubber composition in which the antioxidant in the conductive rubber composition for sensing is replaced with N-phenyl-N'-(1,3-dimethylbutyl)-p-phenylenediamine, otherwise known as antioxidant 6PPD.

[5] The conductive rubber composition for sensing according to any one of the foregoing [1] to [4], having a large resistance range compared to a rubber composition in which the antioxidant in the conductive rubber composition for sensing is replaced with N-phenyl-N'-(1,3-dimethylbutyl)-p-phenylenediamine, otherwise known as antioxidant 6PPD.

[6] The conductive rubber composition for sensing according to any one of the foregoing [1] to [5], wherein the antioxidant satisfies a relationship in formula (ii), shown below,

$$\text{HeavyAtomCount/MolWt} \geq 5.46 \times \text{MaxPartialCharge/MolWt} + 0.068 \quad \cdots \text{(ii)}$$

where, in formula (ii), HeavyAtomCount indicates a number of non-hydrogen atoms in the antioxidant, MolWt indicates molecular weight of the antioxidant, and MaxPartialCharge indicates partial charge, as a value of +δ, of an atom that is most positively charged in the antioxidant.

[7] The conductive rubber composition for sensing according to any one of the foregoing [1] to [6], wherein the antioxidant has a value of 0.072 or more for HeavyAtomCount/MolWt in formula (i).

[8] The conductive rubber composition for sensing according to any one of the foregoing [1] to [7], wherein the antioxidant has a value of 0.001 or less for MaxPartialCharge/MolWt in formula (i).

(Advantageous Effect)

According to the present disclosure, it is possible to provide a conductive rubber composition for sensing that when adopted in a rubber product, enables high-accuracy detection of the magnitude of strain of the rubber product without the use of a sensor.

BRIEF DESCRIPTION OF THE DRAWINGS

In the accompanying drawings:

FIG. 1 is a graph illustrating an example of the manner in which volume resistance (Ωm) varies when strain is applied to a rubber test specimen formed from a rubber composition containing antioxidant 77PD and a rubber test specimen formed from a rubber composition containing antioxidant 6PPD;

FIG. 2 is a side view of an example of a rubber actuator;

FIG. 3 is a partially exploded perspective view of an example of a rubber actuator;

FIG. 4 is a cross-sectional view of an example of a tire; and

FIG. 5 is a graph illustrating a relationship between "HeavyAtomCount/MolWt" (vertical axis) and "MaxPartial-Charge/MolWt" (horizontal axis) for various antioxidants.

DETAILED DESCRIPTION

The following provides a detailed illustrative description of the conductive rubber composition for sensing according to the present disclosure based on embodiments thereof.

<Conductive rubber composition for sensing>

The conductive rubber composition for sensing according to the present disclosure contains a diene rubber, carbon black, and an antioxidant. A feature of the conductive rubber composition for sensing according to the present disclosure is that the antioxidant satisfies a relationship in the following formula (i).

$$\text{HeavyAtomCount/MolWt} \leq 5.46 \times \text{MaxPartialCharge/MolWt} + 0.071 \quad \cdots \text{(i)}$$

[In formula (i), HeavyAtomCount indicates the number of non-hydrogen atoms in the antioxidant, MolWt indicates the molecular weight of the antioxidant, and MaxPartialCharge indicates the partial charge (value of +δ) of an atom that is most positively charged in the antioxidant.]

As previously described, although it is possible to obtain a rubber composition having electrical conductivity by compounding carbon black and/or carbon nanotubes having high electrical conductivity with a rubber component such

as a diene rubber, this conductive rubber composition only makes it possible to roughly infer the magnitude of strain through measurement of an electrical resistance value, and the accuracy of this inference is inadequate.

In response to this issue, the inventor focused on antioxidants that are typically compounded in rubber compositions and found that such antioxidants also contribute to an electrical resistance value of a rubber composition. Moreover, as a result of further studies, the inventor found that when an antioxidant satisfying the relationship in the preceding formula (i) is compounded instead of N-phenyl-N'-(1,3-dimethylbutyl)-p-phenylenediamine (antioxidant 6PPD), which is typically used as an antioxidant, this yields a rubber composition that makes it possible to infer the magnitude of strain with higher accuracy.

FIG. 1 illustrates an example of the manner in which volume resistance (Ωm) varies when strain is applied to a rubber test specimen formed from a rubber composition containing N,N'-bis(1,4-dimethylpentyl)-p-phenylenediamine (antioxidant 77PD) as one example of an antioxidant satisfying the relationship in formula (i) and a rubber test specimen formed from a rubber composition containing N-phenyl-N'-(1,3-dimethylbutyl)-p-phenylenediamine (antioxidant 6PPD). In FIG. 1, the left edge is a point corresponding to no deformation and the right edge is a point corresponding to 70% deformation. FIG. 1 expresses an electrical resistance value measured in one cycle of: No deformation -> Deformation (max. 70%) -> No deformation.

In a case in which a rubber composition containing an antioxidant satisfying the relationship in formula (i) is used, there is a larger difference between electrical resistance values before and after deformation of a rubber product than in a case in which a rubber composition containing antioxidant 6PPD is used, and thus the magnitude of strain can be inferred with higher accuracy.

Therefore, when the conductive rubber composition for sensing according to the present disclosure is adopted in a rubber product, the conductive rubber composition for sensing according to the present disclosure enables high-accuracy detection of the magnitude of strain of the rubber product without the use of a sensor.

(Diene rubber)

The conductive rubber composition for sensing according to the present disclosure contains a diene rubber. The diene rubber brings about rubber elasticity in the composition and enables extension and contraction of the rubber composition. Moreover, as a result of the diene rubber being compounded in combination with the subsequently described antioxidant in the rubber composition, the rubber composition is provided with sufficient ozone resistance.

The diene rubber may be natural rubber (NR), synthetic isoprene rubber (IR), butadiene rubber (BR), styrene-butadiene rubber (SBR), acrylonitrile-butadiene rubber (NBR), chloroprene rubber (CR), or the like. The diene rubber may be one type of diene rubber used individually, or may be a blend of two or more types of diene rubbers.

(Carbon black)

The conductive rubber composition for sensing according to the present disclosure contains carbon black. The carbon black brings about electrical conductivity in the composition and enables sensing of the rubber composition.

The content of the carbon black is preferably 45 parts by mass or more, and more preferably 50 parts by mass or more relative to 100 parts by mass of the diene rubber. When the content of the carbon black is 45 parts by mass or more relative to 100 parts by mass of the diene rubber, the rubber composition has a sufficiently low electrical resistance value (i.e., electricity sufficiently flows).

Moreover, the content of the carbon black is preferably 70 parts by mass or less, more preferably 60 parts by mass or less, and even more preferably 55 parts by mass or less relative to 100 parts by mass of the diene rubber. When the content of the carbon black is 55 parts by mass or less relative to 100 parts by mass of the diene rubber, the rubber composition has a sufficiently high electrical resistance value (i.e., electricity does not excessively flow), electrical resistance value change is even easier to detect, and hardness of the rubber composition is reduced, resulting in suitable hardness for adoption in tube rubber of a rubber actuator, for example.

The carbon black preferably has a cetyltrimethylammonium bromide (CTAB) adsorption specific surface area of 110 $m^2/g$ or more. When the CTAB adsorption specific surface area of the carbon black is 110 $m^2/g$ or more, the carbon black has a sufficiently small particle size, and the rubber composition has a sufficiently low electrical resistance value (i.e., electricity sufficiently flows).

The cetyltrimethylammonium bromide (CTAB) adsorption specific surface area of the carbon black is preferably 140 $m^2/g$ or less from a viewpoint of operability.

Note that the cetyltrimethylammonium bromide (CTAB) adsorption specific surface area of the carbon black in the present specification is a value measured based on JIS K6217-3 and indicates the external surface area of the carbon black, exclusive of micropores, as the specific surface area when CTAB (cetyltrimethylammonium bromide) adsorbs to the carbon black.

The carbon black preferably has a compressed-sample dibutyl phthalate (24M4DBP) absorption number of 90

mL/100 g or more. The 24M4DBP absorption number of the carbon black is a physical property related to structure of the carbon black. The electrical resistance value of the rubber composition decreases with increasing 24M4DBP absorption number. Moreover, the 24M4DBP absorption number of the carbon black is an indicator of high strain loss and is related to the amount of rubbing together of the carbon black at high strain. Electrical resistance value change increases with increasing rubbing together of the carbon black at high strain. Furthermore, when the 24M4DBP absorption number of the carbon black is 90 mL/100 g or more, the rubber composition has a sufficiently low electrical resistance value and larger electrical resistance value change relative to strain.

The compressed-sample dibutyl phthalate (24M4DBP) absorption number of the carbon black is preferably 130 mL/100 g or less from a viewpoint of suppressing variation due to kneading.

Note that the compressed-sample dibutyl phthalate (24M4DBP) absorption number of the carbon black in the present specification is a value determined by measuring the DBP (dibutyl phthalate) absorption number after four repetitions of pressure application with a pressure of 24,000 psi in accordance with ISO 6894. The 24M4DBP absorption number is an indicator for evaluating the skeletal structure of carbon black based mainly on the primary structure thereof and is used when determining the DBP absorption number based on non-destructive true structural form (primary structure) by excluding the DBP absorption number based on deformable and destructive structural form (secondary structure) formed through so-called Van der Waals forces.

The carbon black may be HAF-, ISAF-, or SAF-grade carbon black, for example, without any specific limitations. One of these carbon blacks may be used individually, or two or more of these carbon blacks may be used together.

(Antioxidant)

The conductive rubber composition for sensing according to the present disclosure contains an antioxidant. The antioxidant satisfies a relationship in the following formula (i).

$$\text{HeavyAtomCount/MolWt} \leq 5.46 \times \text{MaxPartialCharge/MolWt} + 0.071 \quad \cdots \text{(i)}$$

In formula (i), HeavyAtomCount indicates the number of non-hydrogen atoms in the antioxidant, and MolWt indicates the molecular weight of the antioxidant. Moreover, MaxPartialCharge in formula (i) is an indicator that influences permittivity and indicates the partial charge (value of +δ) of a most positively charged atom when the partial charge is calculated as the Gasteiger charge for each atom in a molecule of the antioxidant.

Note that "HeavyAtomCount", "MolWt", and "MaxPartialCharge" in formula (i) and the subsequently described formula (ii) are values obtained through logic calculation using RDkit (Open-source cheminformatics; http://www.rdkit.org), which is free software (OSS: Open-Source Software), by inputting the structural formula of a compound.

An antioxidant satisfying formula (i) tends to have low partial charge, and thus tends to result in lower permittivity. Moreover, by reducing the permittivity of the rubber composition, such an antioxidant tends to result in the rubber composition having a larger resistance range (electrical resistance value change width) when strain is applied. Therefore, when a rubber composition that contains an antioxidant satisfying the relationship in formula (i) is adopted in a rubber product, this enables high-accuracy detection of the magnitude of strain of the rubber product without the use of a sensor.

The antioxidant preferably satisfies a relationship in the following formula (2).

$$\text{HeavyAtomCount/MolWt} \geq 5.46 \times \text{MaxPartialCharge/MolWt} + 0.068 \quad \cdots (2)$$

[In formula (2), HeavyAtomCount indicates the number of non-hydrogen atoms in the antioxidant, MolWt indicates the molecular weight of the antioxidant, and MaxPartialCharge indicates the partial charge (value of +δ) of an atom that is most positively charged in the antioxidant.] In this case, it is possible to detect the magnitude of strain of a rubber product in which the conductive rubber composition for sensing is adopted with even higher accuracy.

The antioxidant preferably has a value of 0.072 or more for HeavyAtomCount/MolWt in formula (1). In this case, it is possible to detect the magnitude of strain of a rubber product in which the conductive rubber composition for sensing is adopted with even higher accuracy.

The antioxidant preferably has a value of 0.001 or less for MaxPartialCharge/MolWt in formula (1). In this case, it is possible to detect the magnitude of strain of a rubber product in which the conductive rubber composition for sensing is adopted with even higher accuracy.

The antioxidant is preferably a p-phenylenediamine antioxidant.

The p-phenylenediamine antioxidant is preferably a p-phenylenediamine antioxidant that does not include a double bond other than in a phenylenediamine moiety, and is more preferably a p-phenylenediamine compound represented by the following general formula (1).

[Chem. 1]

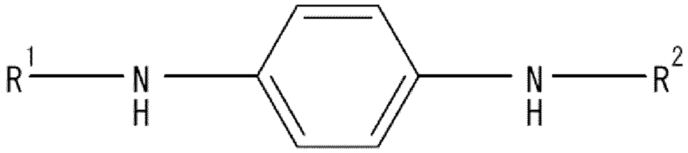

··· (1)

[In general formula (1), $R^1$ and $R^2$ are each independently a monovalent saturated hydrocarbon group.]

In general formula (1), $R^1$ and $R^2$ are each independently a monovalent saturated hydrocarbon group. Although $R^1$ and $R^2$ may be the same or may be different from each other, it is preferable that $R^1$ and $R^2$ are the same from a synthetic viewpoint.

The carbon number of the monovalent saturated hydrocarbon group is preferably 1 to 20, more preferably 3 to 10, and particularly preferably 6 or 7. When the carbon number of the saturated hydrocarbon group is 20 or less, the antioxidant has a larger age resistance effect due to the number of moles thereof per unit mass increasing, and thus ozone resistance of vulcanized rubber and/or the rubber composition improves.

$R^1$ and $R^2$ in general formula (1) are preferably each independently a chain or cyclic monovalent saturated hydrocarbon group having a carbon number of 1 to 20.

The monovalent saturated hydrocarbon group may be an alkyl group or a cycloalkyl group, where the alkyl group may be linear or branched, and the cycloalkyl group may further have an alkyl group or the like bonded thereto as a substituent.

Examples of the alkyl group include a methyl group, an ethyl group, an n-propyl group, an isopropyl group, an n-butyl group, an isobutyl group, a sec-butyl group, a tert-butyl group, a 1,2-dimethylbutyl group, a 1,3-dimethylbutyl group, a 2,3-dimethylbutyl group, an n-pentyl group, an isopentyl group, a neopentyl group, a 1-methylpentyl group, a 2-methylpentyl group, a 3-methylpentyl group, a 4-methylpentyl group, a 1,2-dimethylpentyl group, a 1,3-dimethylpentyl group, a 1,4-dimethylpentyl group, a 2,3-dimethylpentyl group, a 2,4-dimethylpentyl group, a 3,4-dimethylpentyl group, an n-hexyl group, a 1-methylhexyl group, a 2-methylhexyl group, various octyl groups, various decyl groups, and various dodecyl groups, of which, a 1,4-dimethylpentyl group is preferable.

Examples of the cycloalkyl group include a cyclopentyl group, a methylcyclopentyl group, a cyclohexyl group, a methylcyclohexyl group, a cycloheptyl group, and a cyclooctyl group, of which, a cyclohexyl group is preferable.

The p-phenylenediamine compound represented by general formula (1) may, more specifically, be N,N'-bis(1,4-dimethylpentyl)-p-phenylenediamine (antioxidant 77PD), N,N'-bis(1-ethyl-3-methylpentyl)-p-phenylenediamine, N,N'-dicyclohexyl-p-phenylenediamine (antioxidant CCPD), or the like, of which, N,N'-bis(1,4-dimethylpentyl)-p-phenylenediamine (antioxidant 77PD) and N,N'-dicyclohexyl-p-phenylenediamine (antioxidant CCPD) are preferable, and N,N'-bis(1,4-dimethylpentyl)-p-phenylenediamine (antioxidant 77PD) is particularly preferable. The p-phenylenediamine compound may be one type of p-phenylenediamine compound used individually or may be two or more types of p-phenylenediamine compounds used in combination.

Note that the p-phenylenediamine compound represented by general formula (1) may be mounted on any support. For example, the p-phenylenediamine compound represented by general formula (1) may be mounted on an inorganic filler such as silica or calcium carbonate.

Moreover, the p-phenylenediamine compound represented by general formula (1) may form a masterbatch together with a rubber component used in vulcanized rubber.

Furthermore, the p-phenylenediamine compound represented by general formula (1) may be in the form of a salt with an organic acid. The organic acid used to obtain the salt is not specifically limited and may be stearic acid or the like.

Besides the p-phenylenediamine compound described above, a phenolic compound such as styrenated phenol (antioxidant SPH) or pentaerythritol tetrakis[3-(3,5-di-tert-butyl-4-hydroxyphenyl)propionate] (antioxidant 1010) may be used as the antioxidant.

The content of the antioxidant is preferably 1 part by mass or more, and more preferably 2 parts by mass or more relative to 100 parts by mass of the diene rubber, and is preferably 10 parts by mass or less, and more preferably 6 parts by mass or less relative to 100 parts by mass of the diene rubber. When the content of the antioxidant is 2 parts by mass or more relative to 100 parts by mass of the diene rubber, this increases an effect of reducing permittivity of the rubber composition and an effect of widening the resistance range. Moreover, when the content of the antioxidant is 6 parts by mass or less relative to 100 parts by mass of the diene rubber, the degree of discoloration due to blooming

is good.

(Carbon nanotubes)

The conductive rubber composition for sensing according to the present disclosure may further contain carbon nanotubes. The carbon nanotubes have an effect of improving electrical conductivity of the composition.

The content of the carbon nanotubes is preferably not less than 1 part by mass and not more than 5 parts by mass, and more preferably not less than 2 parts by mass and not more than 5 parts by mass relative to 100 parts by mass of the rubber component. When the content of the carbon nanotubes is 1 part by mass or more relative to 100 parts by mass of the rubber component, the rubber composition has a sufficiently low electrical resistance value (i.e., electricity sufficiently flows), and electrical resistance value change becomes even easier to detect. Moreover, when the content of the carbon nanotubes is 5 parts by mass or less relative to 100 parts by mass of the rubber component, the rubber composition has a sufficiently high electrical resistance value (i.e., electricity does not excessively flow), and electrical resistance value change becomes even easier to detect.

The carbon nanotubes (CNTs) are structures formed of carbon atoms that have a diameter on the scale of nanometers to tens of nanometers and have an ultrafine tube-shaped structure.

The carbon nanotubes may be single-walled nanotubes or may be multi-walled nanotubes.

The carbon nanotubes are preferably carbon nanotubes having a length of 0.1 μm to 30 μm, and more preferably carbon nanotubes having a length of 0.1 μm to 10 μm.

Moreover, the carbon nanotubes are preferably carbon nanotubes having a diameter of 10 nm to 300 nm, and more preferably carbon nanotubes having a diameter of 100 nm to 250 nm.

The carbon nanotubes can be synthesized by plasma CVD (chemical vapor deposition), thermal CVD, surface decomposition, fluidized gas phase synthesis, arc discharge, or the like, and a commercial product can be used as the carbon nanotubes. The commercial product of carbon nanotubes can be carbon nanotubes produced by Kumho Tire Co., Inc., vapor grown carbon fiber VGCF® (VGCF is a registered trademark in Japan, other countries, or both) produced by Showa Denko K.K., or carbon nanotubes produced by Materials Technologies Research (MTR), for example.

(Permittivity during extension)

The conductive rubber composition for sensing according to the present disclosure preferably has reduced permittivity during extension compared to a rubber composition in which the antioxidant in the conductive rubber composition for sensing is replaced with N-phenyl-N'-(1,3-dimethylbutyl)-p-phenylenediamine (antioxidant 6PPD). Reducing the permittivity of the rubber composition during extension makes it easier to increase the resistance range (electrical resistance value change width) of the rubber composition when strain is applied and enables even higher accuracy detection of the magnitude of strain of a rubber product in which the conductive rubber composition for sensing is adopted.

Note that the method by which the permittivity of the rubber composition during extension is reduced may be by compounding an antioxidant satisfying formula (i), by adjusting the compounded amount thereof, etc.

No specific limitations are placed on the length of extension. So long as the length in an arbitrary direction is increased relative to a state in which external force is not applied, this may be considered to be extension.

(Resistance range)

The conductive rubber composition for sensing according to the present disclosure preferably has a large resistance range compared to a rubber composition in which the antioxidant in the conductive rubber composition for sensing is replaced with N-phenyl-N'-(1,3-dimethylbutyl)-p-phenylenediamine (antioxidant 6PPD). Increasing the resistance range (electrical resistance value change width) of the rubber composition when strain is applied makes it possible to detect the magnitude of strain of a rubber product in which the conductive rubber composition for sensing is adopted with even higher accuracy.

Note that the method by which the resistance range of the rubber composition is increased may be by compounding an antioxidant satisfying formula (i), by adjusting the compounded amount thereof, etc.

<Production method of conductive rubber composition for sensing>

The rubber composition according to the present disclosure can be produced by, for example, using a Banbury mixer, rolls, or the like to compound the carbon black and the antioxidant with the diene rubber, further compound carbon nanotubes as desired, and perform kneading thereof, and subsequently performing warming, extrusion, etc.

Besides the components described above, a softener, stearic acid, zinc oxide (flowers of zinc), a vulcanization accelerator, a vulcanizing agent, and so forth may be selected as appropriate and compounded in the conductive rubber

composition for sensing to the extent that the object of the present disclosure is not impeded. Commercial products can suitably be used as these compounding agents.

<Application of conductive rubber composition for sensing>

The conductive rubber composition for sensing according to the present disclosure set forth above has a large resistance range (electrical resistance value change width) when strain is applied and thus can be used for sensing (detecting, perceiving, etc.) the magnitude of strain. The conductive rubber composition for sensing can be used in various rubber products and, in particular, can suitably be used in a tire or tube rubber of a rubber actuator. Besides the above applications, the conductive rubber composition for sensing can appropriately be repurposed for any rubber member in which strain arises during use, such as anti-vibration rubber, seismic isolation rubber, hoses, conveyor belts, rubber crawlers, and gloves. Moreover, it goes without saying that the conductive rubber composition for sensing can be used widely without limitation to the examples of applications given above.

(Rubber actuator)

A rubber actuator according to a preferred aspect in which the conductive rubber composition for sensing according to the present disclosure is used is illustrated in FIG. 2. The rubber actuator 10 illustrated in FIG. 2 includes an actuator main body 100 constituted of tube-shaped tube rubber 110 that expands/contracts through fluid pressure and a sleeve 120 that is a woven tube-shaped structure formed by weaving cords such as to be disposed in certain directions and that covers an outer peripheral surface of the tube rubber 110. The conductive rubber composition for sensing according to the present disclosure set forth above is used for the tube rubber 110.

FIG. 2 is a side view of the rubber actuator 10 according to the present embodiment. As illustrated in FIG. 2, the rubber actuator 10 includes the actuator main body 100, a sealing mechanism 200, and a sealing mechanism 300. Connection portions 20 are provided at respective ends of the rubber actuator 10. Moreover, a resistance value measuring device 30 is connected to each of the connection portions 20.

The actuator main body 100 is constituted of the tube rubber 110 and the sleeve 120. A working fluid flows into the actuator main body 100 via a fitting 400 and a passage hole 410. The rubber actuator 10 operates through fluid pressure and may be of a pneumatic type or a hydraulic type. Moreover, in a case in which a liquid is used as the working fluid, the liquid may be oil, water, or the like. In a case in which the rubber actuator is of an oil pressure type, any suitable working oil that is conventionally used in a driving system employing oil pressure can be used as the working fluid.

The actuator main body 100 contracts in an axial direction $D_{AX}$ and expands in a radial direction $D_R$ of the actuator main body 100 when the working fluid flows into the tube rubber 110. Moreover, the actuator main body 100 expands in the axial direction $D_{AX}$ and contracts in the radial direction $D_R$ of the actuator main body 100 when the working fluid flows out from the tube rubber 110. The rubber actuator 10 functions as an actuator through changes in shape of the actuator main body 100 such as described above.

The rubber actuator 10 as described above is what is referred to as a McKibben type actuator, is applicable for artificial muscle of course, and can also suitably be used for a limb (upper limb, lower limb, etc.) of a robot where higher capability (contraction force) is required. The connection portions 20 are connected to constituent members of a limb or the like. Note that although the resistance value measuring device 30 is connected to the connection portions 20 in the present embodiment, the connection sites of the resistance value measuring device 30 are not limited thereto. For example, the resistance value measuring device 30 may be connected directly to respective end portions of the tube rubber 110.

The sealing mechanism 200 and the sealing mechanism 300 seal the respective end portions of the actuator main body 100 in the axial direction $D_{AX}$. Specifically, the sealing mechanism 200 includes a sealing member 210 and a caulking member 230. The sealing member 210 seals an end portion in the axial direction $D_{AX}$ of the actuator main body 100. The caulking member 230 caulks the actuator main body 100 in collaboration with the sealing member 210. Indentations 231 as caulking marks made by a jig are formed at an outer peripheral surface of the caulking member 230.

Differences between the sealing mechanism 200 and the sealing mechanism 300 reside in the different roles of fittings 400 and 500 (and passage holes 410 and 510).

The fitting 400 provided in the sealing mechanism 200 protrudes such that a driving pressure source of the rubber actuator 10, or more specifically a hose (piping path) connected to a compressor of the working fluid, can be attached to the fitting 400. The working fluid that has flowed into the actuator via the fitting 400 then flows into the inside of the actuator main body 100, or more specifically the inside of the tube rubber 110, via the passage hole 410.

On the other hand, the fitting 500 provided in the sealing mechanism 300 protrudes such that it can be used for gas venting when the working fluid is injected into the rubber actuator 10. In an initial stage of operation of the rubber actuator 10, gas originally present inside of the rubber actuator 10 is expelled from the fitting 500 via the passage hole 510 in response to injection of the working fluid into the rubber actuator 10.

FIG. 3 is a partially exploded perspective view of the rubber actuator 10. As illustrated in FIG. 3, the rubber actuator 10 includes the actuator main body 100 and the sealing mechanism 200.

The actuator main body 100 is constituted of the tube rubber 110 and the sleeve 120 as previously described.

The tube rubber 110 is a circular tube-shaped member capable of expanding/contracting by fluid pressure. The tube rubber 110 repeatedly contracts and expands through the working fluid and is formed using the conductive rubber composition for sensing according to the present disclosure set forth above.

The sleeve 120 has a circular tube shape and covers an outer peripheral surface of the tube rubber 110. The sleeve 120 is a woven structure formed by weaving cords such as to be disposed in certain directions, wherein the cords thus disposed intersect each other to provide repeated rhombic configurations. The sleeve 120 having such a configuration as described above can deform like a pantograph and follow contraction/expansion of the tube rubber 110, while also regulating the contraction/expansion.

In FIG. 3, the sealing mechanism 200 seals an end portion in the axial direction $D_{AX}$ of the actuator main body 100. The sealing mechanism 200 is constituted of the sealing member 210, a locking ring 220, and the caulking member 230.

The sealing member 210 has a trunk portion 211 and a flange portion 212. Metal such as stainless steel can suitably be used for the sealing member 210. However, the material for the sealing member 210 is not limited to metal, and a hard plastic material or the like may alternatively be used.

The trunk portion 211 has a circular tube shape and has a passage hole 215 through which the working fluid flows formed therein. The passage hole 215 communicates with the passage hole 410 (refer to FIG. 2). The trunk portion 211 is inserted into the tube rubber 110.

The flange portion 212, which is integral with the trunk portion 211, is positioned further toward an end portion side in the axial direction $D_{AX}$ of the actuator 10 than the trunk portion 211. The flange portion 212 has a larger outer diameter in the radial direction $D_R$ than the outer diameter of the trunk portion 211. The flange portion 212 locks the tube rubber 110 having the trunk portion 211 inserted therein and the locking ring 220.

Irregular portions 213 are formed at an outer peripheral surface of the trunk portion 211. The irregular portions 213 contribute to suppressing slippage of the tube rubber 110 having the trunk portion 211 inserted therein. The irregular portions 213 preferably include at least three projecting portions.

Furthermore, a small diameter portion 214 having a smaller outer diameter than the trunk portion 211 is formed in the trunk portion 211 at a position adjacent to the flange portion 212.

The locking ring 220 locks the sleeve 120. Specifically, the sleeve 120 is folded backward at an outer side in the radial direction $D_R$ via the locking ring 220.

The outer diameter of the locking ring 220 is larger than that of the trunk portion 211. The locking ring 220 locks the sleeve 120 at a position of the small diameter portion 214 of the trunk portion 211. In other words, the locking ring 220 locks the sleeve 120 at a position that is at a radial direction $D_R$ outer side of the trunk portion 211 and that is adjacent to the flange portion 212.

The locking ring 220 has a configuration split into two portions in the present embodiment so that the locking ring 220 can be locked at the small diameter portion 214 that is smaller than the trunk portion 211. Note that the configuration of the locking ring 220 is not limited to one in which the locking ring 220 is split into two portions. The locking ring 220 may alternatively be split into three or more portions, and some of the split portions may be pivotably linked with each other.

Any of the same metals, hard plastic materials, etc. as for the sealing member 210 can be used for the locking ring 220.

The caulking member 230 caulks the actuator main body 100 in collaboration with the sealing member 210. Metal such as aluminum alloy, brass, iron, or the like can be used for the caulking member 230. Indentations 231 such as illustrated in FIG. 2 are formed on the caulking member 230 as a result of the caulking member 230 being caulked by a caulking jig.

As previously described, the tube rubber 110 repeatedly contracts and expands through the working fluid and is formed using the conductive rubber composition for sensing according to the present disclosure.

An electrical resistance value of the actuator main body 100 (tube rubber 110) decreases as a contraction ratio of the actuator main body 100 increases. This is because when the fluid flows into the actuator main body 100 and the actuator main body 100 contracts in the axial direction $D_{AX}$, the tube rubber 110 expands in the radial direction $D_R$ within a certain range that is regulated by the sleeve 120, and the thickness of the tube rubber 110 decreases during this expansion, thereby narrowing the separation of carbon black (and carbon nanotubes) contained in the tube rubber 110.

Specifically, during contraction of the actuator main body 100, the film thickness of the tube rubber 110 decreases due to extension of the tube rubber 110. This results in a dimension (separation) of carbon black (and carbon nanotubes) in the film thickness direction narrowing, and the carbon black (and carbon nanotubes) being brought closer together.

In other words, as the contraction ratio of the actuator main body 100 increases and the length of the actuator main body 100 shortens, the separation of carbon black (and carbon nanotubes) narrows, thus resulting in an increase

of electrical conductivity of the tube rubber 110 (i.e., lowering of an electrical resistance value of the tube rubber 110). Moreover, by measuring this resistance value through the resistance value measuring device 40 that is connected to each of the connection portions 30, it is possible to measure the magnitude of strain of the tube rubber 110 with high accuracy.

(Tire)

Next, a tire according to a preferred aspect in which the conductive rubber composition for sensing according to the present disclosure is used is illustrated in FIG. 4. A tire 40 according to a preferred aspect includes a pair of bead portions 41, a pair of sidewall portions 42, a tread portion 43, and a carcass 45 that reinforces each of these portions, and further includes a sensing rubber member 47 at a tire inner surface side of the carcass 45.

The tire 40 that is illustrated in FIG. 4 includes a pair of bead portions 41, a pair of sidewall portions 42, a tread portion 43, and a carcass 45 extending in a toroidal shape between bead cores 44 that are embedded in the respective bead portions 41. In the tread portion 43, the tire 40 further includes a belt 46 formed of two reinforcement layers 46a and 46b that are disposed at an inner side of a tread surface in a tire radial direction and at an outer side of a crown portion of the carcass 45 in the tire radial direction and a sensing rubber member 47 that is disposed at a tire inner surface side of the carcass 45. Moreover, a resistance value measuring device 48 is connected to both end portions of the sensing rubber member 47.

In the tire 40 illustrated in FIG. 4, the carcass 45 is constituted of a single carcass ply and includes a main body portion that extends in a toroidal shape between the pair of bead cores 44 that are embedded in the respective bead portions 41 and turn-up portions that are folded up in an outward radial direction around the respective bead cores 44 from inside to outside in a tire width direction. However, the number of plies and the structure of the carcass 45 are not limited to this configuration. Note that a radial carcass is preferable as the carcass from a viewpoint of durability of the tire. The carcass ply constituting the carcass 45 has a configuration in which a plurality of reinforcing cords are coated by coating rubber. The reinforcing cords may be organic fiber cords such as polyethylene terephthalate cords, nylon cords, or rayon cords, or may alternatively be steel cords.

The belt 46 of the tire 40 illustrated in FIG. 4 is constituted of two belt layers 46a and 46b. Each of the belt layers is normally a rubber coated layer of cords that extend in an inclined manner relative to a tire equatorial plane, and is preferably a steel cord layer coated with rubber. Moreover, the two belt layers are stacked to form the belt 46 such that constituent cords of these belt layers intersect with the tire equatorial plane interposed therebetween. Note that although the belt 46 in FIG. 4 includes two belt layers, the number of belt layers constituting the belt 46 is not limited thereto and may be any number that is 1 or more.

Moreover, although not illustrated in FIG. 4, a belt reinforcement layer a and a belt reinforcement layer b may be disposed further outward than the belt 46 in the tire radial direction of the tire 40. The belt reinforcement layer a may be disposed such as to cover the entirety of the belt 46, and a pair of belt reinforcement layers b may be disposed such as to only cover the respective tire width direction end portions of the belt reinforcement layer a at an outer side of the belt reinforcement layer a in the tire radial direction. The belt reinforcement layer a and the belt reinforcement layer b may be formed of a polyethylene terephthalate cord layer coated with rubber that is arranged substantially parallel to a tire circumferential direction.

The tire 40 illustrated in FIG. 4 includes the sensing rubber member 47 at an innermost surface of the tire, which is a tire inner surface side of the carcass 45. The sensing rubber member 47 may be provided in place of an inner liner that is normally provided in order to ensure airtightness of the tire (i.e., the sensing rubber member 47 may have air impermeability in addition to sensing functionality), or may be separately attached at a tire inner surface side of the inner liner.

The sensing rubber member 47 is formed from the conductive rubber composition for sensing according to the present disclosure set forth above. The resistance value measuring device 48 is connected to both end portions of the sensing rubber member 47, thereby enabling high-accuracy measurement of the magnitude of strain of the tire 10 through measurement (monitoring) of a resistance value of the sensing rubber member 47 by the resistance value measuring device 48. Moreover, by measuring (monitoring) the magnitude of strain of the tire 10, it is possible to continuously acquire information such as road surface conditions, tire grounding conditions, tire wear conditions, and so forth.

EXAMPLES

The following describes the present disclosure in more detail through Examples. However, the present disclosure is not in any way limited by the following Examples.

<Production of rubber composition>

Rubber compositions having formulations indicated in Table 1 were produced through kneading by a typical method.

A relationship between "HeavyAtomCount/MolWt" and "MaxPartialCharge/MolWt" for used antioxidants is illustrated in FIG. 5. Moreover, a point based on calculated values (HeavyAtomCount/MolWt = 0.073412, MaxPartialCharge/MolWt = 0.00058854) for N,N'-dicyclohexyl-p-phenylenediamine (antioxidant CCPD), which is an example of an antioxidant satisfying the relationship in formula (i), is also recorded in FIG. 5.

<Testing with vulcanized rubber>

Each of the obtained rubber compositions was used to produce a test specimen that was subjected to platinum vapor deposition at both ends on one side leaving a length of 20 mm with a strip shape of 1 mm in thickness and 4.7 mm in width. The resistance range (electrical resistance value change width), mean squared error (MSE) of magnitude of strain, and permittivity were measured by the following methods with respect to this test specimen.

(1) Resistance range (electrical resistance value change width) and mean squared error (MSE) of magnitude of strain

The test specimen was connected to a tensile test machine (model K18003) produced by System One Co., Ltd., and the magnitude of strain and electrical resistance value (Ωm) during extension of the test specimen by 70% (minimum-maximum strain: 0-70%) with a tensing rate of 6 mm/s were measured. Differences in terms of resistance range (electrical resistance value change width) for cases with the same filler formulation were evaluated by:

expressing the resistance range in each of Comparative Examples 1-1 and 1-2 and Examples 1-1 to 1-4 as an index value with the resistance range in Comparative Example 1-1 set as 100;
expressing the resistance range in each of Comparative Example 2 and Examples 2-1 and 2-2 as an index value with the resistance range in Comparative Example 2 set as 100;
expressing the resistance range in each of Comparative Example 3 and Example 3 as an index value with the resistance range in Comparative Example 3 set as 100;
expressing the resistance range in each of Comparative Example 4 and Example 4 as an index value with the resistance range in Comparative Example 4 set as 100; and
expressing the resistance range in each of Comparative Example 5 and Example 5 as an index value with the resistance range in Comparative Example 5 set as 100.

Moreover, machine learning was performed with magnitude of strain as a target variable and resistance value as an explanatory variable so as to determine correlation between the magnitude of strain and electrical resistance value.

Next, the mean squared error (MSE) was calculated for the actual magnitude of strain and the magnitude of strain inferred from the electrical resistance value (i.e., the magnitude of strain inferred from the electrical resistance value using the correlation between the magnitude of strain and electrical resistance value described above).

(2) Permittivity

The test specimen was connected to a tensile test machine (model K18003) produced by System One Co., Ltd., and the permittivity at 20 Hz during extension of the test specimen by 70% was measured using an E4990A produced by Keysight Technologies. Differences in permittivity for cases with the same filler formulation were evaluated by:

expressing the permittivity in each of Comparative Examples 1-1 and 1-2 and Examples 1-1 to 1-4 as an index value with the permittivity in Comparative Example 1-1 set as 100;
expressing the permittivity in each of Comparative Example 2 and Examples 2-1 and 2-2 as an index value with the permittivity in Comparative Example 2 set as 100;
expressing the permittivity in each of Comparative Example 3 and Example 3 as an index value with the permittivity in Comparative Example 3 set as 100;
expressing the permittivity in each of Comparative Example 4 and Example 4 as an index value with the permittivity in Comparative Example 4 set as 100; and
expressing the permittivity in each of Comparative Example 5 and Example 5 as an index value with the permittivity in Comparative Example 5 set as 100.

| | | | Comparative Example 1-1 | Comparative Example 1-2 | Example 1-1 | Example 1-2 | Example 1-3 | Example 1-4 | Comparative Example 2 | Example 2-1 | Example 2-2 | Comparative Example 3 | Example 3 | Comparative Example 4 | Example 4 | Comparative Example 5 | Example 5 |
|---|---|---|---|---|---|---|---|---|---|---|---|---|---|---|---|---|---|
| Formulation | NR *1 | Parts by mass | 30 | 30 | 30 | 30 | 30 | 30 | 30 | 30 | 30 | 30 | 30 | 30 | 30 | 30 | 30 |
| | BR *2 | | 70 | 70 | 70 | 70 | 70 | 70 | 70 | 70 | 70 | 70 | 70 | 70 | 70 | 70 | 70 |
| | Wax *3 | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Carbon black 1 *4 | | 50 | 50 | 50 | 50 | 50 | 50 | - | - | - | 50 | 50 | 55 | 55 | - | - |
| | Carbon black 2 *5 | | - | - | - | - | - | - | 50 | 50 | 50 | - | - | - | - | 55 | 55 |
| | Carbon nanotubes *6 | | - | - | - | - | - | - | - | - | - | 4 | 4 | 4 | 4 | - | - |
| | Antioxidant 6PPD *7 | | 5 | - | - | - | - | - | 5 | - | - | 5 | - | 5 | - | 5 | - |
| | Antioxidant SDPA *8 | | - | 5 | - | - | - | - | - | - | - | - | - | - | - | - | - |
| | Antioxidant SPH *9 | | - | - | 5 | - | - | - | - | - | - | - | - | - | - | - | - |
| | Antioxidant 1010 *10 | | - | - | - | 5 | - | - | - | - | 5 | - | - | - | - | - | - |
| | Antioxidant 77PD *11 | | - | - | - | - | 3 | 6 | - | 5 | - | - | 5 | - | 5 | - | 5 |

(continued)

| | | | Comparative Example 1-1 | Comparative Example 1-2 | Example 1-1 | Example 1-2 | Example 1-3 | Example 1-4 | Comparative Example 2 | Example 2-1 | Example 2-2 | Comparative Example 3 | Example 3 | Comparative Example 4 | Example 4 | Comparative Example 5 | Example 5 |
|---|---|---|---|---|---|---|---|---|---|---|---|---|---|---|---|---|---|
| | Other crosslinking system chemicals *12 | | 6 | 6 | 6 | 6 | 6 | 6 | 6 | 6 | 6 | 6 | 6 | 6 | 6 | 6 | 6 |
| | Mean squared error (MSE) of magnitude of strain | - | 69 | 71 | 36 | 40 | 43 | 35 | 64 | 35 | 38 | 75 | 37 | 85 | 38 | 36 | 35 |
| Evaluation results | Resistance range | Index value | 100 | 80 | 131 | 134 | 135 | 230 | 100 | 142 | 113 | 100 | 282 | 100 | 366 | 100 | 164 |

(continued)

| | | | Comparative Example 1-1 | Comparative Example 1-2 | Example 1-1 | Example 1-2 | Example 1-3 | Example 1-4 | Comparative Example 2 | Example 2-1 | Example 2-2 | Comparative Example 3 | Example 3 | Comparative Example 4 | Example 4 | Comparative Example 5 | Example 5 |
|---|---|---|---|---|---|---|---|---|---|---|---|---|---|---|---|---|---|
| | Permittivity during 70% tensing | Index value | 100 | 113 | 81 | 82 | 71 | 67 | 100 | 18 | 65 | 100 | 94 | 100 | 92 | 100 | 48 |

*1 NR: Natural rubber, RSS#2
*2 BR: High-cis butadiene rubber, produced by Ube Industries, Ltd., UBEPOL-BR150L (product name)
*3 Wax: Produced by Seiko Chemical Co., Ltd., SUNTIGHT S
*4 Carbon black 1: Produced by Tokai Carbon Co., Ltd., SEAST 6 (product name), CTAB adsorption specific surface area = 112 $m^2/g$, 24M4DBP absorption number = 100 mL/100 g
*5 Carbon black 2: Produced by Asahi Carbon Co., Ltd.; ASAHI #78 (product name), CTAB adsorption specific surface area = 123 $m^2/g$, 24M4DBP absorption number = 100 mL/100 g
*6 Carbon nanotubes: Produced by Kumho Tire Co., Inc.; CNT K-Nanos-100P (product name)
*7 Antioxidant 6PPD: N-Phenyl-N'-(1,3-dimethylbutyl)-p-phenylenediamine, HeavyAtomCount/MolWt = 0.000620, MaxPartialCharge/MolWt = 0.074515
*8 Antioxidant SDPA: Produced by Kawaguchi Chemical Industry Co., Ltd., DDA (product name), HeavyAtomCount/MolWt = 0.000441, MaxPartialCharge/MolWt = 0.076815
*9 Antioxidant SPH: Produced by Kawaguchi Chemical Industry Co., Ltd., SP (product name), HeavyAtomCount/MolWt = 0.000969, MaxPartialCharge/MolWt = 0.076054
*10 Antioxidant 1010: Produced by ADEKA Corporation, ADK STAB AO-60 (product name), HeavyAtomCount/MolWt = 0.000260, MaxPartialCharge/MolWt = 0.072177
*11 Antioxidant 77PD: p-Phenylenediamine compound for which $R^1$ and $R^2$ in general formula (1) are saturated hydrocarbon groups (1,4-dimethylpentyl groups), N,N'-bis(1,4-dimethylpentyl)-p-phenylenediamine, produced by Eastman Chemical Company, HeavyAtomCount/MolWt = 0.000526, MaxPartialCharge/MolWt = 0.072244
*12 Other crosslinking system chemicals: Total amount of vulcanizing agent, vulcanization accelerator, etc.

Structural formulae for the used antioxidant 6PPD, antioxidant SDPA, antioxidant SPH, antioxidant 1010, and antioxidant 77PD are shown below.

[Chem. 2]

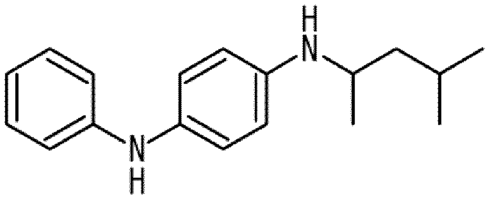

···6PPD

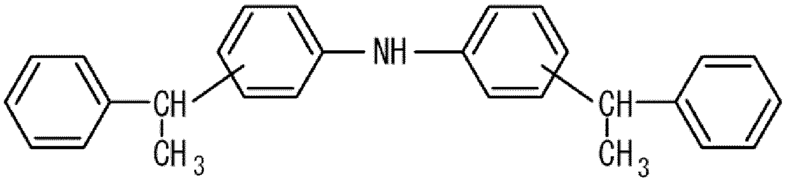

···SDPA

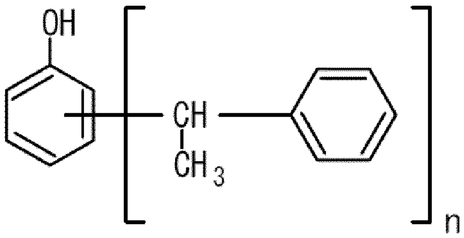

···SPH

n=1, 2, 3

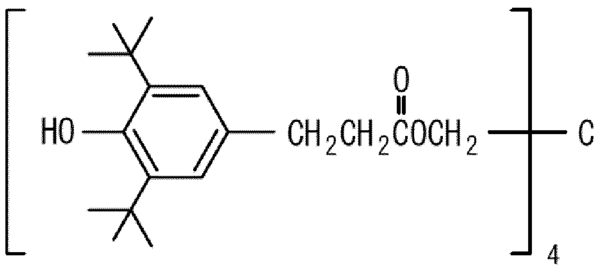

···1010

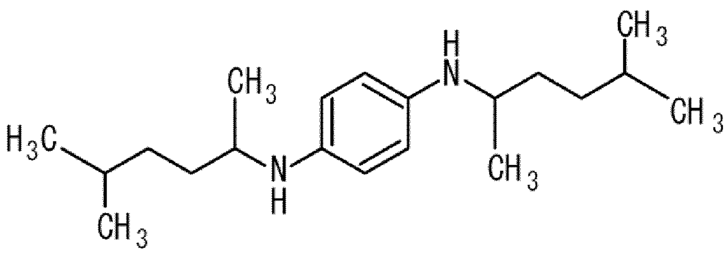

···77PD

It can be seen from Table 1 that compared to a rubber composition containing antioxidant 6PPD, the rubber compositions of the Examples, which are in accordance with the present disclosure, have a low permittivity, a large resistance range, and a small mean squared error (MSE) for the actual magnitude of strain and the magnitude of strain inferred from an electrical resistance value, and enable high-accuracy detection of the magnitude of strain.

INDUSTRIAL APPLICABILITY

The conductive rubber composition for sensing according to the present disclosure enables high-accuracy

detection of the magnitude of strain of a rubber product without the use of a sensor when adopted in the rubber product and can be used in various rubber products such as tires and tube rubber of rubber actuators.

REFERENCE SIGNS LIST

| | |
|---|---|
| 10: | rubber actuator |
| 20: | connection portion |
| 30: | resistance value measuring device |
| 100: | actuator main body |
| 110: | tube rubber |
| 111: | inner layer rubber |
| 112: | outer layer rubber |
| 120: | sleeve |
| 200: | sealing mechanism |
| 210: | sealing member |
| 211: | trunk portion |
| 212: | flange portion |
| 213: | irregular portion |
| 214: | small diameter portion |
| 215: | passage hole |
| 220: | locking ring |
| 230: | caulking member |
| 231: | indentation |
| 300: | sealing mechanism |
| 400, 500: | fitting |
| 410, 510: | passage hole |
| $D_{AX}$: | axial direction |
| $D_R$: | radial direction |
| 40: | tire |
| 41: | bead portion |
| 42: | side wall portion |
| 43: | tread portion |
| 44: | bead core |
| 45: | carcass |
| 46: | belt |
| 46a, 46b: | reinforcement layer |
| 47: | sensing rubber member |
| 48: | resistance value measuring device |

## Claims

1. A conductive rubber composition for sensing comprising a diene rubber, carbon black, and an antioxidant, wherein the antioxidant satisfies a relationship in formula (i), shown below,

$$\mathrm{HeavyAtomCount/MolWt} \leq 5.46 \times \mathrm{MaxPartialCharge/MolWt} + 0.071 \quad \cdots \text{(i)}$$

where, in formula (i), HeavyAtomCount indicates a number of non-hydrogen atoms in the antioxidant, MolWt indicates molecular weight of the antioxidant, and MaxPartialCharge indicates partial charge, as a value of $+\delta$, of an atom that is most positively charged in the antioxidant.

2. The conductive rubber composition for sensing according to claim 1, wherein content of the carbon black is 45 parts by mass or more relative to 100 parts by mass of the diene rubber.

**3.** The conductive rubber composition for sensing according to claim 1 or 2, wherein the carbon black has a cetyltrimethylammonium bromide (CTAB) adsorption specific surface area of 110 $m^2/g$ or more.

**4.** The conductive rubber composition for sensing according to any one of claims 1 to 3, having reduced permittivity during extension compared to a rubber composition in which the antioxidant in the conductive rubber composition for sensing is replaced with N-phenyl-N'-(1,3-dimethylbutyl)-p-phenylenediamine, otherwise known as antioxidant 6PPD.

**5.** The conductive rubber composition for sensing according to any one of claims 1 to 4, having a large resistance range compared to a rubber composition in which the antioxidant in the conductive rubber composition for sensing is replaced with N-phenyl-N'-(1,3-dimethylbutyl)-p-phenylenediamine, otherwise known as antioxidant 6PPD.

**6.** The conductive rubber composition for sensing according to any one of claims 1 to 5, wherein the antioxidant satisfies a relationship in formula (ii), shown below,

$$\text{HeavyAtomCount/MolWt} \geq 5.46 \times \text{MaxPartialCharge/MolWt} + 0.068 \quad \cdots \text{(ii)}$$

where, in formula (ii), HeavyAtomCount indicates a number of non-hydrogen atoms in the antioxidant, MolWt indicates molecular weight of the antioxidant, and MaxPartialCharge indicates partial charge, as a value of $+\delta$, of an atom that is most positively charged in the antioxidant.

**7.** The conductive rubber composition for sensing according to any one of claims 1 to 6, wherein the antioxidant has a value of 0.072 or more for HeavyAtomCount/MolWt in formula (i).

**8.** The conductive rubber composition for sensing according to any one of claims 1 to 7, wherein the antioxidant has a value of 0.001 or less for MaxPartialCharge/MolWt in formula (i).

FIG. 1

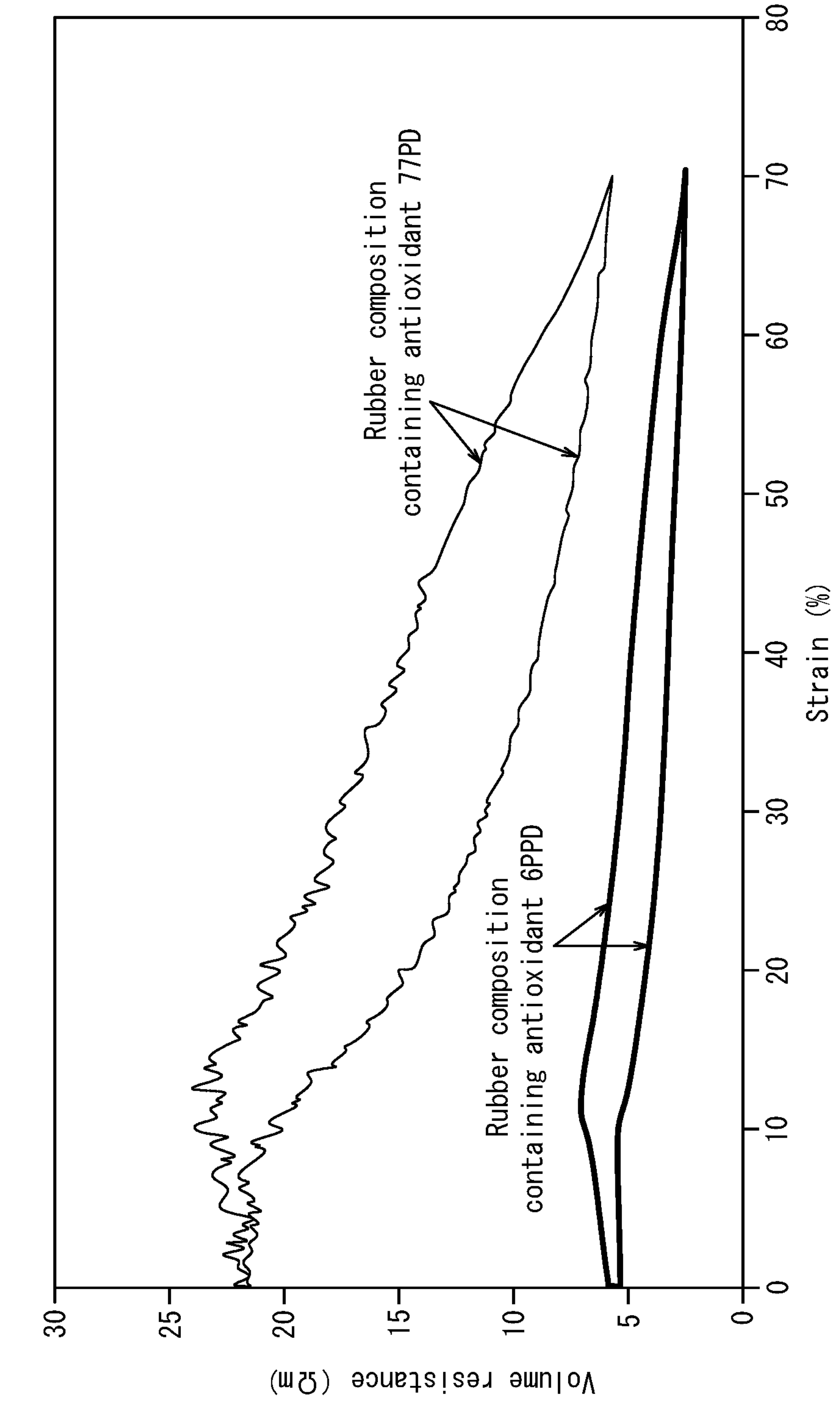
Volume resistance (Ωm)
30
25
20
15
10
5
0
Strain (%)
0
10
20
30
40
50
60
70
80
Rubber composition containing antioxidant 77PD
Rubber composition containing antioxidant 6PPD

FIG. 2

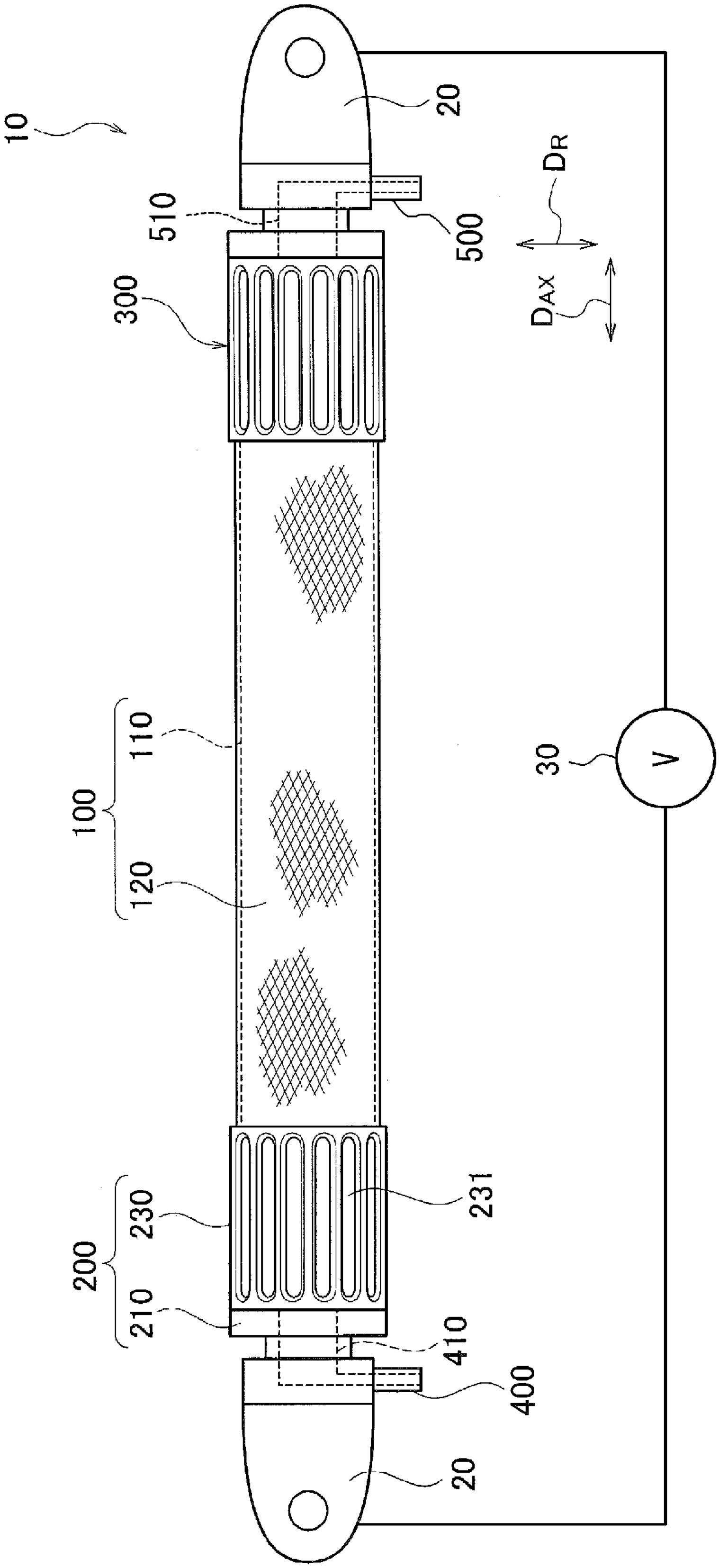
10
20
510
500
DR
DAX
300
110
100
120
30
V
230
200
210
231
410
400
20

FIG. 3

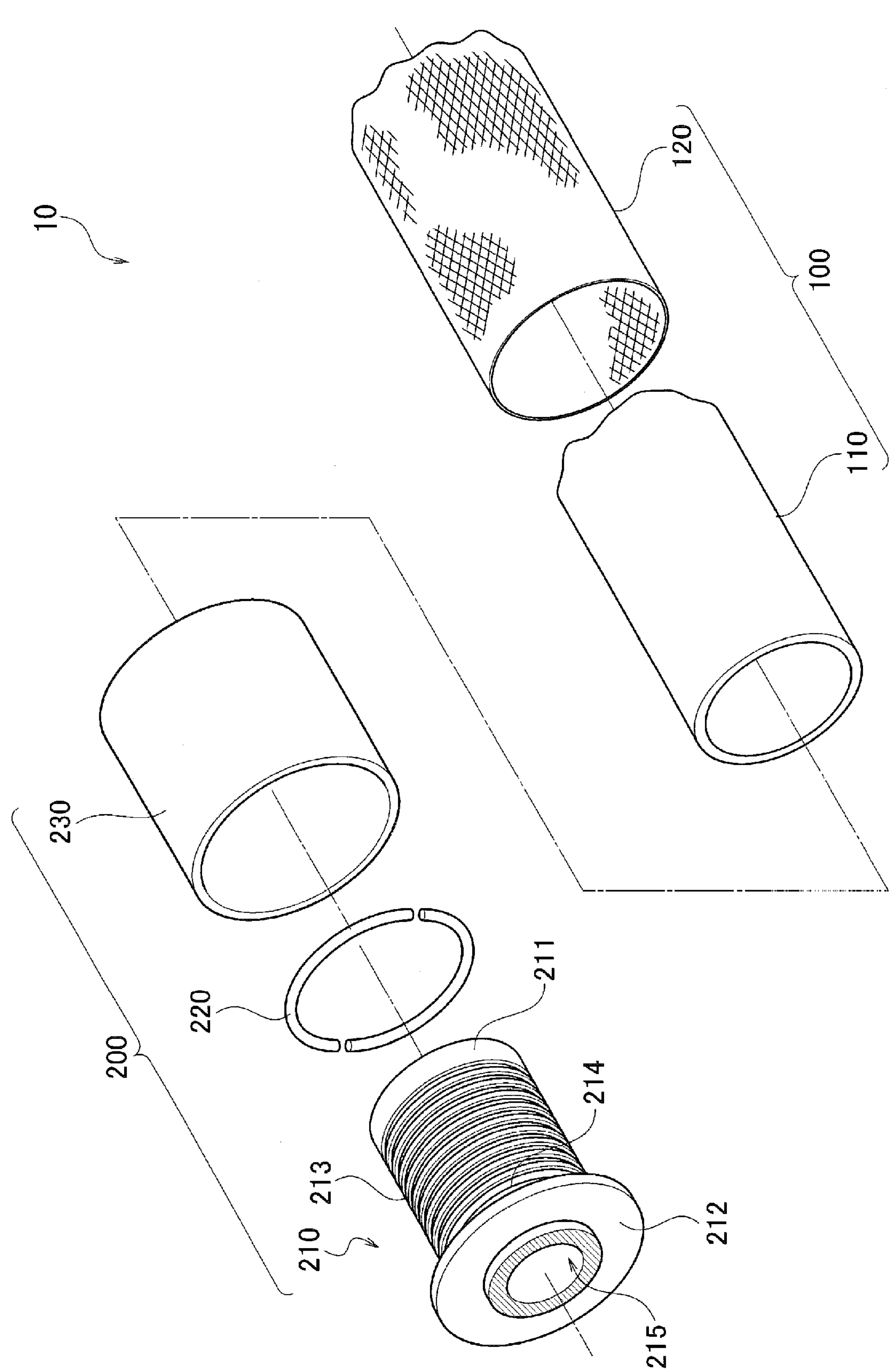

FIG. 4

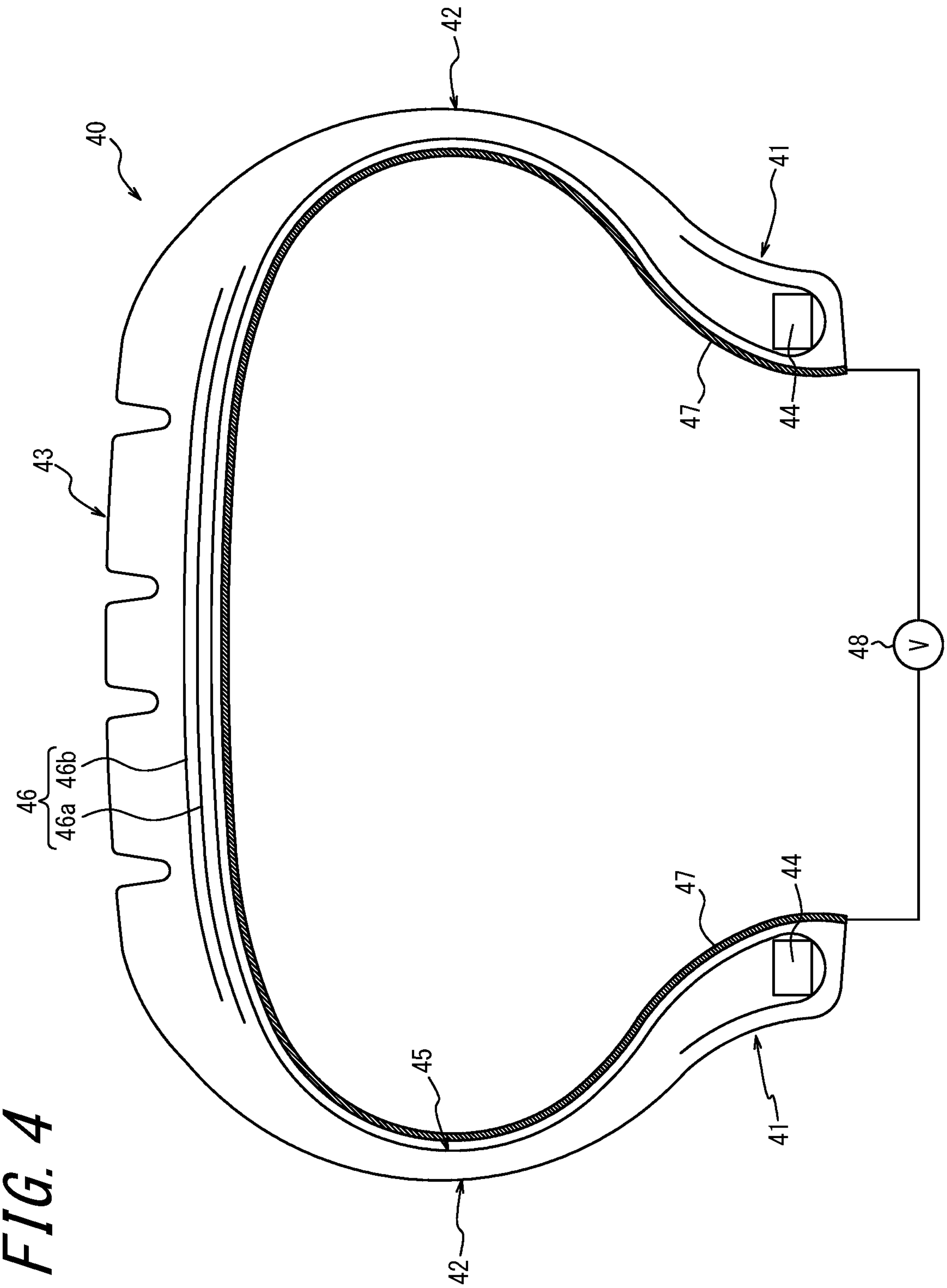

FIG. 5

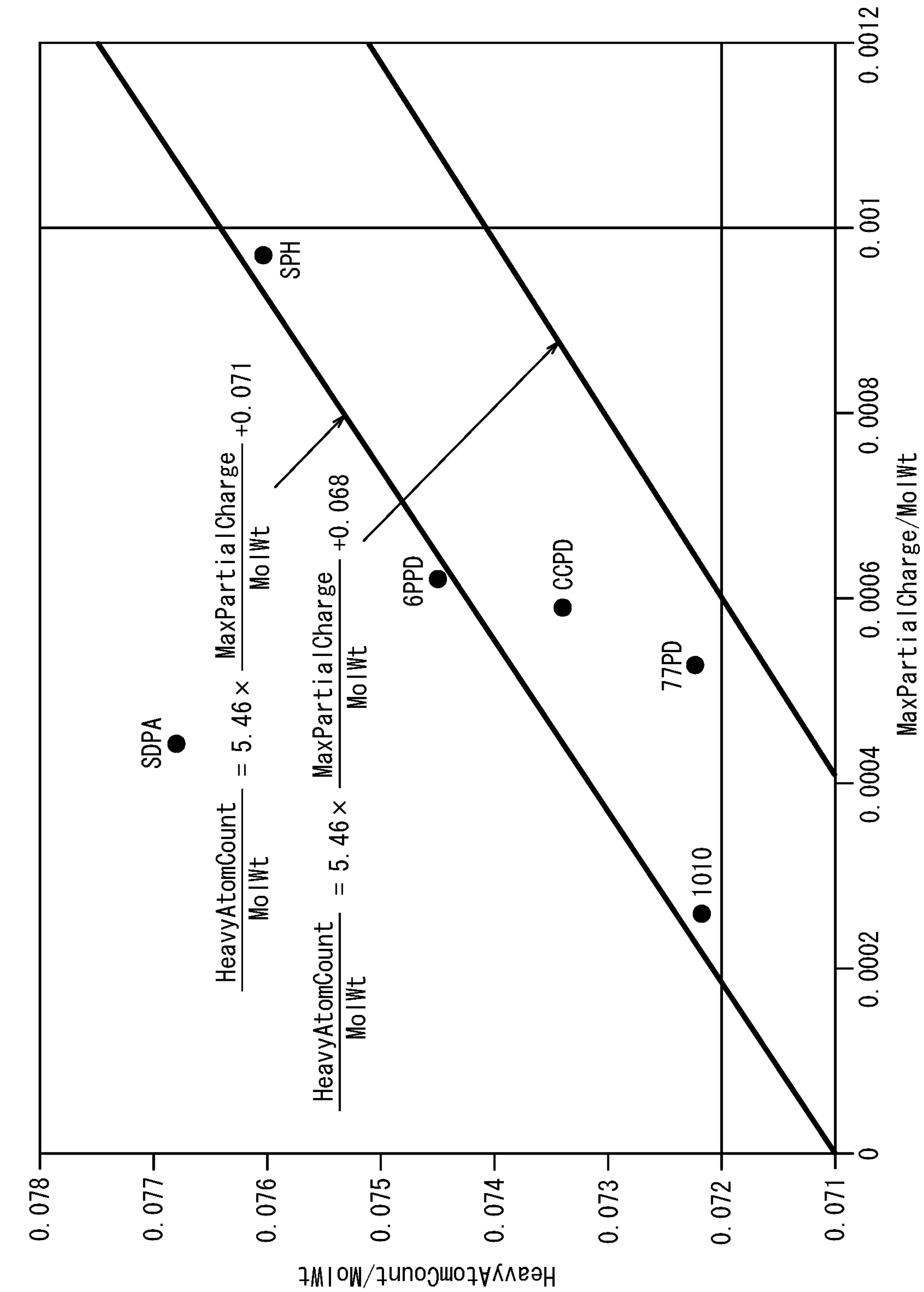
HeavyAtomCount/MolWt
MaxPartialCharge/MolWt
0.078
0.077
0.076
0.075
0.074
0.073
0.072
0.071
0
0.0002
0.0004
0.0006
0.0008
0.001
0.0012
SDPA
SPH
6PPD
CCPD
77PD
1010
HeavyAtomCount / MolWt = 5.46 × MaxPartialCharge / MolWt +0.071
HeavyAtomCount / MolWt = 5.46 × MaxPartialCharge / MolWt +0.068

## INTERNATIONAL SEARCH REPORT

International application No. **PCT/JP2022/035528**

**A. CLASSIFICATION OF SUBJECT MATTER**

***C08L 9/00***(2006.01)i; ***B60C 1/00***(2006.01)i; ***C08K 3/04***(2006.01)i; ***C08K 5/18***(2006.01)i; ***C08L 7/00***(2006.01)i; ***G01B 7/16***(2006.01)i
FI: C08L9/00; B60C1/00 Z; C08K3/04; C08K5/18; C08L7/00; G01B7/16 R

According to International Patent Classification (IPC) or to both national classification and IPC

**B. FIELDS SEARCHED**

Minimum documentation searched (classification system followed by classification symbols)

C08L9/00; B60C1/00; C08K3/04; C08K5/18; C08L7/00; G01B7/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2013-82874 A (SUMITOMO RUBBER INDUSTRIES, LTD.) 09 May 2013 (2013-05-09) claims, paragraphs [0065], [0084], example 33 | 1-8 |
| A | JP 2006-208051 A (BRIDGESTONE CORP) 10 August 2006 (2006-08-10) | 1-8 |
| A | JP 2006-208052 A (BRIDGESTONE CORP) 10 August 2006 (2006-08-10) | 1-8 |
| A | JP 2008-249621 A (YOKOHAMA RUBBER CO LTD) 16 October 2008 (2008-10-16) | 1-8 |
| P, A | CN 114075352 A (SUZHOU NUSHA INTELLIGENT TECH CO., LTD.) 22 February 2022 (2022-02-22) | 1-8 |
| P, A | JP 2022-29842 A (BRIDGESTONE CORP) 18 February 2022 (2022-02-18) | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/035528**

| Patent document cited in search report | Publication date (day/month/year) | Patent family member(s) | Publication date (day/month/year) |
|---|---|---|---|
| JP 2013-82874 A | 09 May 2013 | US 2014/0202609 A1<br>claims, paragraphs [0066], [0086], example 33<br>WO 2013/046804 A1<br>EP 2743303 A1<br>KR 10-2014-0047723 A<br>CN 103857741 A | |
| JP 2006-208051 A | 10 August 2006 | (Family: none) | |
| JP 2006-208052 A | 10 August 2006 | (Family: none) | |
| JP 2008-249621 A | 16 October 2008 | (Family: none) | |
| CN 114075352 A | 22 February 2022 | (Family: none) | |
| JP 2022-29842 A | 18 February 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008037906 A